Europäisches Patentamt

European Patent Office

Office européen des brevets

(11) Publication number: **0 424 542 A1**

# EUROPEAN PATENT APPLICATION
## published in accordance with Art. 158(3) EPC

(21) Application number: 90907384.3

(22) Date of filing: 27.04.90

(86) International application number:
PCT/JP90/00565

(87) International publication number:
WO 90/13855 (15.11.90 90/26)

(51) Int. Cl.⁵: G05B 19/403, G05B 19/405

(30) Priority: 10.05.89 JP 115020/89

(43) Date of publication of application:
02.05.91 Bulletin 91/18

(84) Designated Contracting States:
DE FR GB

(71) Applicant: FANUC LTD.
3580, Shibokusa Aza-Komamba Oshino-mura
Minamitsuru-gun, Yamanashi 401-05(JP)

(72) Inventor: SEKI, Masaki
3-15-2-406, Takaidonishi Suginami-ku
Tokyo 168(JP)

Inventor: TAKEGAHARA, Takashi
256-2, Nishiteragata-machi Hachioji-shi
Tokyo 192-01(JP)
Inventor: NAKAMURA, Shinya Fanuc Dai-3
Vira-karamatsu
3527-1, Shibokusa Oshino-mura
Minamitsuru-gun
Yamanashi 401-05(JP)

(74) Representative: Billington, Lawrence Emlyn et
al
Haseltine Lake & Co Hazlitt House 28,
Southampton Buildings Chancery Lane
London WC2A 1AT(GB)

(54) CONVERSATIONAL APPARATUS FOR PREPARING PART PROGRAM.

(57) A conversational apparatus for easily and efficiently preparing part program. A processor (1) of an automatic programming apparatus that prepares part program temporarily stores a character sequence and temporarily displays it on the lowermost line of the display screen of a graphic display device (7) when it is manually input through a keyboard (5). The operator designates a character sequence on the display screen using cursor, and depresses conversational keys to inquire a character sequence that can be defined following the character sequence designated by the cursor. Then, the processor retrieves a table in the memory (3) and displays possible character sequences on the screen. When a required one is manually selected out of the character sequences, the selected character sequence is temporarily stored following the stored character sequence and is temporarily displayed on the screen.

When the return key is operated after the input of a series of character sequences that constitute a statement, the group of character sequences temporarily stored is registered in a memory (3) and displayed on the central part of the display screen. The part program prepared by repeating the above-mentioned operation is stored in a memory (4).

## INTERACTIVE PART PROGRAM CREATING APPARATUS

Technical Field

The present invention relates to an interactive part program creating apparatus capable of easily efficiently creating a part program.

Background Art

As is generally known, a part program is created by entering a series of program statements (statements) into an automatic programming apparatus or the like through a keyboard. In this case, a group of programming language elements, which are adapted for software (programming system) used in the programming apparatus and serve to define each of the program statements, must be successively inputted in a required order according to the grammar of the software. Therefore, it is difficult for an unskilled person, who is not well informed of the software grammar, to accurately input a series of program statements constituting the part program. Meanwhile, a skilled person may possibly forget how to spell the programming language elements or the software grammar. In such a case, a manual must be referred to, thus requiring labor and lowering the efficiency of program creation.

Disclosure of the Invention

The object of the present invention is to provide an interactive part program creating apparatus capable of easily efficiently creating a part program.

In order to achieve the above object, an interactive part program creating apparatus according to the present invention comprises entry means for manually entering programming language elements; display means having a display screen; selecting means for manually selecting a required one of the programming language elements displayed on the display screen; storage means for storing at least one of the programming language elements definable following each of the programming language elements so as to correspond to each programming language element; retrieval means for automatically retrieving from the storage means the at least one programming language element definable following the manually selected programming language element; display control means for automatically displaying the manually entered programming language element and the at least one retrieved programming language element on the display screen; and registration means for automatically registering the manually entered and selected programming language elements as part program constituents in the order of the entry and selection.

According to the present invention, as described above, the programming language elements are permitted to be manually inputted and are displayed on the screen to be subjected to manual selection, and the language elements definable following the manually selected language element are automatically retrieved and automatically displayed, and further the manually successively entered and selected programming language elements are automatically registered in succession as the part program constituents. Accordingly, an operator can enter a required programming language element group accurately and speedily without entailing errors in the spelling of the programming language elements or in the order of the entry. Thus, even an unskilled person can create a part program easily and efficiently.

Brief Description of the Drawings

Fig. 1 is a schematic block diagram showing the principal part of an automatic programming apparatus according to one embodiment of the present invention;

Fig. 2 is a flow chart showing a part program creating process executed by the apparatus shown in Fig. 1;

Fig. 3 is a diagram showing an edit picture obtained when the creation of a machine tool operation program is assigned at the time of creation of a new part program;

Fig. 4 is a diagram showing a picture obtained when inquiries are made about candidates for character strings to be inputted after the assignment of a machine tool;

Fig. 5 is a diagram showing a picture obtained when a lathe and a milling machine are displayed as the character string candidates;

Fig. 6 is a diagram showing a picture obtained when the milling machine is selected;

Fig. 7 is a diagram showing a picture obtained when inquiries are made about candidates for character strings to be inputted after the selection of the milling machine;

Fig. 8 is a diagram showing a picture obtained when an incremental system and an absolute system are displayed as the character string candidates;

Fig. 9 is a diagram showing a picture obtained when the incremental system is selected; and
Fig. 10 is a diagram showing a picture obtained when the entry of first and second statements of the part program is completed.


Best Mode of Carrying Out the Invention

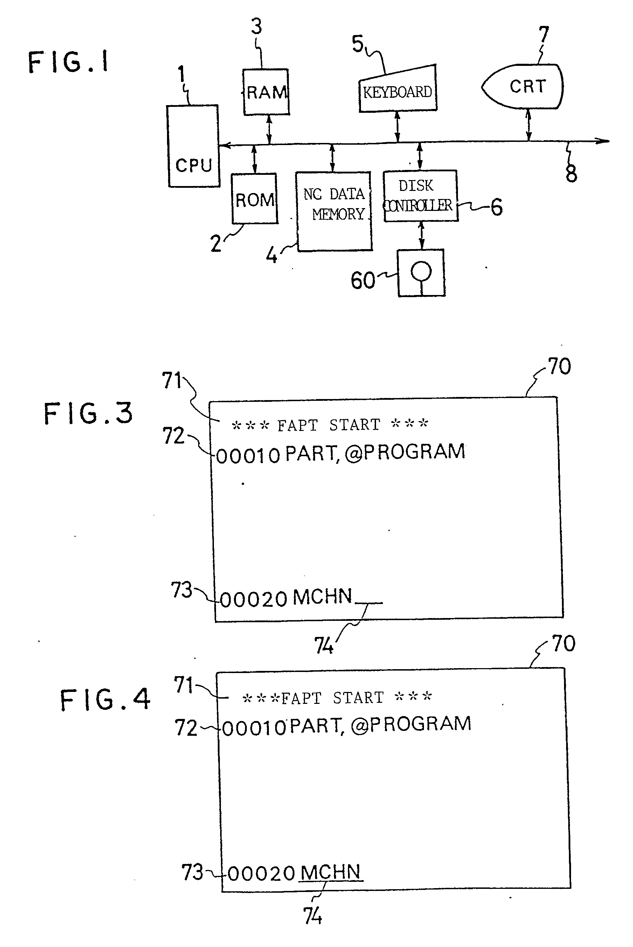

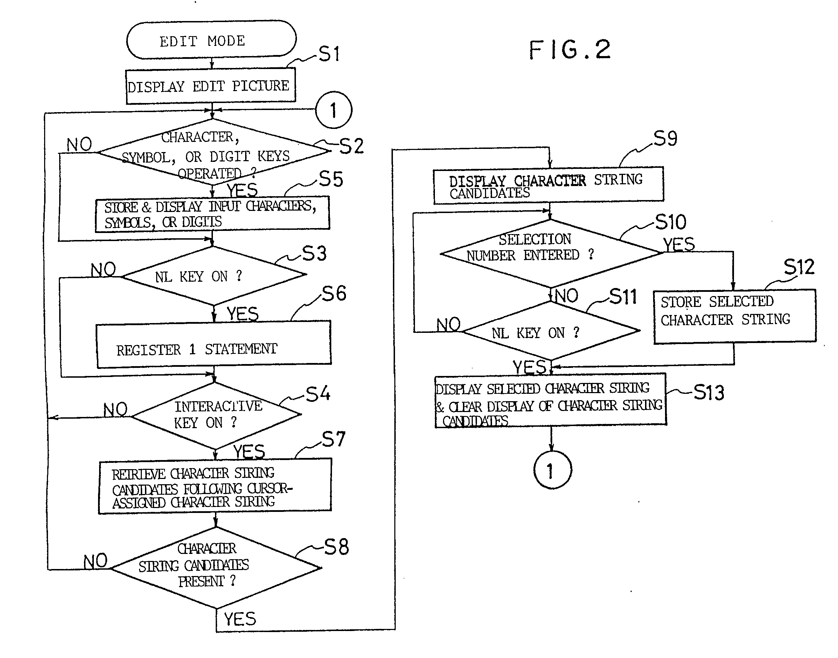

Referring to Fig. 1, an automatic programming apparatus comprises a processor (hereinafter referred to as CPU) 1 which functions as retrieval means, display control means, and registration means during the execution of a part program creating process mentioned later, a read-only memory (ROM) 2 stored with a program for controlling the operation of the programming apparatus, a random access memory (RAM) 3 for storing the results of processing by the CPU 1, and a program (Fig. 2) and a lookup table for the part program creating process. Further, the programming apparatus is operable in various modes, such as an edit mode for part program creation, an automatic programming mode for automatically creating an NC program (NC data) in accordance with the created part program, and comprises an NC data memory 4 for storing the created NC program. The programming apparatus functions as a part program creating apparatus in the edit mode.

Further, the programming apparatus comprises a keyboard 5 which has various keys, including an operation mode selector key, cursor key, character keys, digit keys, symbol keys, new line (NL) key, and interactive key, a disk controller 6 loadable with a floppy disk 60, and a graphic display unit (hereinafter referred to as CRT) 7 having a display screen 70 (see Fig. 3, for example). The floppy disk 60 is stored with a program for the part program creation process and a lookup table used for the part program creation process. In the lookup table, one or more programming language elements definable following each of various programming language elements are set in a manner corresponding to each of the various programming language elements, and form one statement (program statement) along with each of the various language elements which are used for the creation of various part programs and adapted for a programming system (e.g., FAPT) used in the automatic programming apparatus. If there are no language elements definable following the language element concerned, as in the case where one language element is the last language constituent of one statement, a corresponding data region of the lookup table is left blank, for example. The program and the lookup table for the part program creation process are permitted to be transferred from the floppy disk 60 to the RAM 3 under the control of the disk controller 6. The aforementioned elements 2 to 7 are connected to the CPU 1 by means of busses 8.

Referring now to Fig. 2, the operation of the programming apparatus of Fig. 1 will be described.

When an operator selects the edit mode by operating the operation mode selector key of the keyboard 5, the program and the lookup table for the part program creation process, respectively stored in the floppy disk 60, are transferred to the RAM 3 under the control of the disk controller 6, and the CPU 1 periodically executes the part program creation process shown in Fig. 2.

In the processing period immediately after the selection of the edit mode, the CPU 1, for use as the display control means, controls the CRT 7, thereby causing an edit picture on the CRT screen 70 (Step S1). At this time, a message "***FAPT START***" is displayed on a first line 71 of the edit picture, and a first line number "00010" of the program is displayed on a temporary statement display region 73 located at the lowest line of the CRT screen. By this, the readiness for programming is declared. Then, the CPU 1 determines whether or not the character keys, symbol keys, or digit keys have been operated (Step S2). If the decision is negative, the CPU 1 determines whether or not the NL key is turned on (Step S3). If the decision of this step is also negative, the CPU 1 determines whether or not the interactive key is turned on (Step S4). If the decision of this step is negative, the program returns to Step S2, whereupon the CPU 1 stands ready for the key operation.

In creating a new part program, the operator successively operates the character and symbol keys, thereby inputting a character/symbol string formed of e.g. "PART, @PROGRAM" (more typically, a programming language element formed of character/digit/symbol string; hereinafter referred as character string) in order to declare the creation of the part program. Every time a key is operated, the CPU 1 stores in its built-in register inputted characters or symbols (more typically, characters, digits, or symbols; hereinafter referred to as characters) in the order of entry, and controls the CRT 7, thereby causing the input characters to be displayed on the temporary program display region 73 of the CRT screen 70 in the order of entry, following the program line number "00010" (Step S5). At this time, a cursor 74 moves by columns to the right on the CRT screen, thereby indicating the next display position, every time each character is entered.

When the operator operates the NL key after the character string "PART, @PROGRAM" (more typically, one statement) is entered, the CPU 1 detects this in Step S3 of the processing period immediately after the key operation. Then, the CPU 1, for use as the registration means, registers the stored character string "PART, @PROGRAM," as the first statement to constitute the part program, in the RAM 3 (Step S6). In response to the operation of the NL key, the next program line number "00020" is displayed on the temporary statement display region 73 of the CRT screen 70 under the control of the CPU 1, and the first statement "PART, @PROGRAM" is displayed on the first line of a statement display region 72 of the CRT screen 70, following the program line number "00010."

Then, the operator enters a character string constituting a second statement of the part program, in like manner. In order to create a part program for machine tool operation, for example, the operator inputs a character string "MCHN." In this case, the character string "MCHN" is stored in the built-in register of the CPU 1, the character string "MCHN" is displayed on the temporary statement display region 73 of the CRT screen 70, following the program line number "00020," and the next input character display position in the region 73 is indicated by the cursor 74 (see Fig. 3). If the character string to be inputted following the character string "MCHN," in order to create the second statement, cannot be specified, or if the character string cannot be correctly spelled, the operator operates the cursor key of the keyboard 5 to move the cursor 74 to the previously entered character string "MCHN," as shown in Fig. 4, and then operates the interactive key of the keyboard 5.

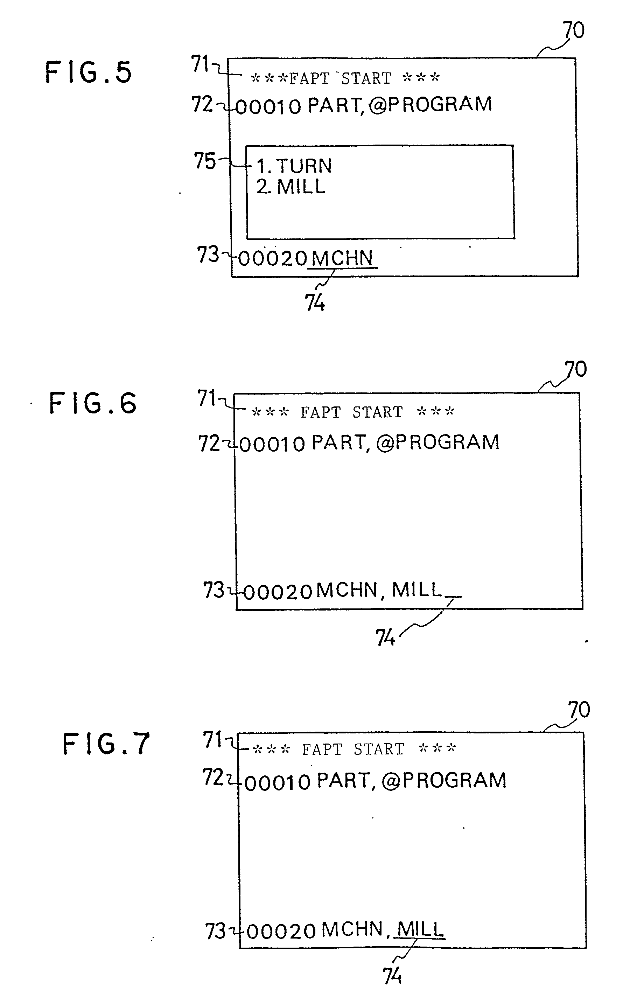

When the operation of the interactive key is detected in Step S4 of the processing period immediately after the interactive key operation, the CPU 1, for use as the retrieval means, first refers to the lookup table stored in the RAM 3 to determine whether or not the programming language element "MCHN" is set in the table. Here, the language element "MCHN" is set in the lookup table. If the programming language element (character string) assigned by the cursor is set in the lookup table in this manner, the CPU 1 determines whether or not one or more programming elements corresponding to the cursor-assigned language element are set in the table (Step S7), and determines whether or not there exists one or more language elements (candidates for character strings) definable following the language element concerned (Step S8). Here, two language elements "TURN" and "MILL," which are definable following the language element "MCHN" and are indicative of a lathe and a milling machine, respectively, are set in the table, so that the decision in Step S8 is positive. The CPU 1 controls the CRT 7 to cause a candidate display region 75 of the CRT screen 70 to display the two language elements "TURN" and "MILL" with selection numbers "1" and "2," respectively, affixed thereto (Step S9), as shown in Fig. 5, and then stands ready for digit key operation for selection number entry and NL key operation for statement registration.

In creating a part program for milling machine operation, the operator operates a digit key "2" to select a selection number corresponding to the programming language element "MILL." When the CPU 1 discriminates a selection number input in Step S10 of the processing period immediately after the digit key operation, it reads from the lookup table the language element "MCHN" assigned by the cursor and the language element "MILL" associated with the selection number "2," and stores the register with the latter language element after the previously stored language element "MCHN" (Step S12). Further, the CPU 1 controls the CRT 7 to cause the temporary statement display region 73 of the CRT screen 70 to display the character string "MILL" after the program line number "00020" and the character string "MCHN" previously displayed, as shown in Fig. 6, and also clears indications "1. TURN" and "2. MILL" on the candidate display region 75 (Step S13). Then, the CPU 1 stands ready for the operation of the various keys (Steps S2 to S4).

If the character string to be inputted after the character string "MCHN, MILL," in order to create the second statement, cannot be specified, or if the character string cannot be correctly spelled, the operator operates the cursor key of the keyboard 5 to move the cursor 74 to the entered character string "MILL," as shown in Fig. 7, and then operates the interactive key of the keyboard 5.

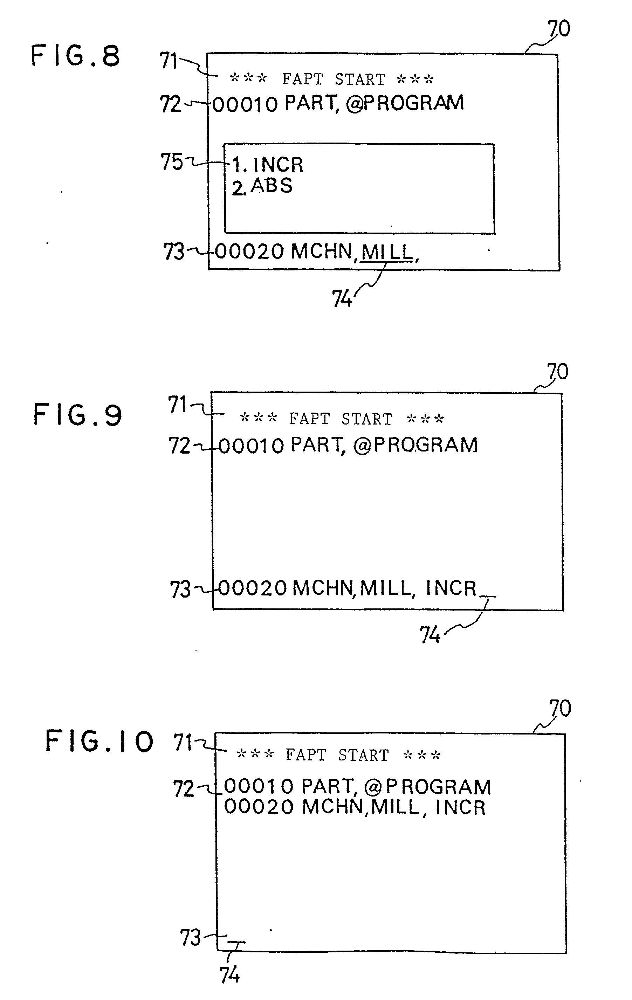

When the interactive key operation is discriminated (Step S4), the CPU 1 executes the same processing for the case of the aforementioned interactive key operation. More specifically, the CPU 1 refers to the lookup table (Step S7), discriminates language elements "INCR" and "ABS," respectively indicating that a command move amount is to be set in term of an incremental system and an absolute system, as character strings definable following the character string "MILL" (Step S8), and causes both these character strings to be displayed on the candidate display region 75 of the CRT screen 70, as shown in Fig. 8 (Step S9). If the operator selectively operates a digit key "1," which corresponds to the character string "INCR," in order to select the incremental system as the system for setting the command move amount, the CPU 1 discriminates the selection number input in Step S10, and stores in the register the character string "INCR" read from the lookup table in accordance with the cursor-assigned character string "MILL" and the selection number "1" in such a manner that it follows the previously stored character string "MCHN, MILL." As shown in Fig. 9, moreover, the CPU 1 causes the temporary statement display region 73 of the CRT screen to make a display after the previously displayed character string "MCHN, MILL," and clears the display on the candidate display region 75 (Steps S12 and S13).

Then, if the operator operates the interactive key after moving the cursor 74 to the previously entered character string "INCR," in order to inquire of the programming apparatus about the operation to be performed next to create the second statement, the CPU 1 retrieves a programming language element (character string) definable following the character string "INCR" (Step S7). The character string "INCR" constitutes the end of a statement associated therewith, so that there is no character string definable following this character string. In this case, the CPU 1 stands ready for various key operations without causing the candidate display region 75 of the CRT screen 70 to make a display. Seeing that there is no language element display, the operator concludes that the creation of the second statement is finished, and operates the NL key. The CPU 1 discriminates this in Step S3 of the processing period immediately after the key operation, and registers a series of character strings "MCHN, MILL, INCR," displayed on the temporary statement display region 73 and temporarily stored in the register, as the second statement to constitute the part program, in the RAM 3 (Step S6). Under the control of the CPU 1, moreover, the cursor 74 moves to the top position of the temporary statement display region 73 of the CRT screen 70, and the first and second statements "PART, @PROGRAM" and "MCHN, MILL, INCR" are displayed on the first and second lines of the statement display region 72, respectively, as shown in Fig. 10.

Thereafter, a program line number "00030" is automatically displayed on the temporary statement display region 73 of the CRT screen 70. The operator inputs a series of character strings, forming a third statement which constitutes the part program, by means of the keyboard 5, in the same manner as in the cases of the first and second statements. In the meantime, if how to operate for the creation of the third statement is unknown, that is, if the character string to be entered or how to spell the character string is unknown, for example, the interactive key is operated to inquire of the programming apparatus about it as aforesaid. If one or more character strings are displayed on the CRT screen in response to this, a required character string is selected.

If the NL key is operated in place of the digit key operation for the character string selection, with one or more character strings displayed on the candidate display region 75 in response to the interactive key operation, the CPU 1 concludes that the character string selection is abandoned (Step S11). In this case, the display on the region 75 is cleared under the control of the CPU 1 (Step S13).

In the inquiry through the interactive key operation, moreover, a command (character string) qualified by means of a numeric parameter sometimes may be assigned by means of the cursor. The command of this kind should be followed by not a character string but the numeric parameter, and the numeric parameter, which cannot be automatically set without variation by means of the programming apparatus, should be set by the operator. When the interactive key is operated after the character string (command) of the aforesaid type is cursor-assigned, the CPU 1 concludes that there is no character string definable following the character string concerned (Step S8). In this case, there is no display on the candidate display region 75 of the CRT screen. Seeing that there is no display, the operator concludes that the numeric parameter should be inputted after the cursor-assigned character string, and inputs the parameter value by operating the digit keys (Step S2).

For each of the fourth statement and its subsequent statements, a series of character strings constituting each statement is inputted in like manner. Each statement is registered in the RAM 3, following the last one of the previously registered statements, in response to the NL key operation after the end of the creation of the statement concerned. Thereafter, when the operator selects the programming mode by operating the operation mode selector key after completion of registration (part program registration) of all the statements that constitute the part program, the programming apparatus automatically creates an NC program on the basis of the previously registered part program, and stores the memory 4 with the NC program thus created.

The present invention is not limited to the embodiment described above, and various modifications thereof may be made.

In the above embodiment, for example, no display is made on the candidate display region 75 of the CRT screen 70 if the cursor-assigned character string is a command which requires parameter qualification. Alternatively, however, a message such as "INPUT PARAMETER" may be displayed on the region 75 to urge the operator to input the numeric parameter. In this case, it is necessary only that this message be handled as a character string which is definable following the cursor-assigned character string, and be displayed in Step S9 for character string candidate display, which is subsequent to Step S8 for character string candidate presence discrimination, when the interactive key is operated after the aforesaid command is cursor-assigned. In this case, moreover, it is necessary that no selection number be affixed to the message in order to prohibit selection number entry, Step S10 for selection number discrimination be skipped when the message is displayed, and the message display be cleared in Step S13 when the operator operates the NL key after referring to the message display.

In the above described embodiment, furthermore, no display is made on the CRT screen if there is no character string definable following the cursor-assigned character string. Alternatively, however, a message such as "NO CHARACTER STRING CANDIDATE" may be displayed. In this case, it is necessary only that the same processing be effected in the same manner as in the case of the foregoing modification.

## Claims

1.  An interactive part program creating apparatus comprising:
    entry means for manually entering programming language elements;
    display means having a display screen;
    selecting means for manually selecting a required one of the programming language elements displayed on said display screen;
    storage means for storing at least one of the programming language elements definable following each said programming language element so as to correspond to each said programming language element;
    retrieval means for automatically retrieving from said storage means said at least one programming language element definable following said manually selected programming language element;
    display control means for automatically displaying said manually entered programming language elements and said at least one retrieved programming language element on said display screen; and
    registration means for automatically registering said manually entered and selected programming language elements as part program constituents in the order of the entry and selection.

2.  An interactive part program creating apparatus according to claim 1, wherein said display control means controls said display means so that the display of said at least one retrieved programming language element is cleared when the automatic registration by means of said registration means is effected.

3.  An interactive part program creating apparatus according to claim 1, wherein said display control means controls said display means so that no display is made on said display screen when it is concluded that there exists no programming language element definable following said manually selected programming language element.

4.  An interactive part program creating apparatus according to claim 1, wherein said display control means controls said display means so that a program statement formed of at least one programming language element is displayed on said display screen when said program statement is automatically registered by means of said registration means.

FIG.1

FIG.3

```
*** FAPT START ***
00010 PART, @PROGRAM



00020 MCHN
```

FIG.4

```
***FAPT START ***
00010 PART, @PROGRAM



00020 MCHN
```

7

FIG.2

```
              ┌──────────────────┐
              (   EDIT MODE      )─── S1
              └──────────────────┘
                       │
         ┌─────────────────────────┐
         │ DISPLAY EDIT PICTURE    │
         └─────────────────────────┘
                       │
                      (1)
                       │
    NO        ╱ CHARACTER,      ╲ ─── S2
   ┌─────────┤  SYMBOL, OR DIGIT KEYS ├
   │          ╲  OPERATED ?     ╱
   │                  │ YES                    ─── S5
   │         ┌──────────────────────────────┐
   │         │ STORE & DISPLAY INPUT CHARACTERS,│
   │         │ SYMBOLS, OR DIGITS            │
   │         └──────────────────────────────┘
   │                  │
   │    NO    ╱               ╲ ─── S3
   │  ┌──────┤   NL KEY ON ?   ├
   │  │       ╲               ╱
   │  │              │ YES              ─── S6
   │  │     ┌─────────────────────────┐
   │  │     │  REGISTER 1 STATEMENT   │
   │  │     └─────────────────────────┘
   │  │              │
   │  │    NO ╱  INTERACTIVE  ╲ ─── S4
◄──┼──┼──────┤   KEY ON ?     ├
   │  │       ╲               ╱
   │  │              │ YES            ─── S7
   │  │     ┌──────────────────────────┐
   │  │     │ RETRIEVE CHARACTER STRING │
   │  │     │ CANDIDATES FOLLOWING CURSOR-│
   │  │     │ ASSIGNED CHARACTER STRING  │
   │  │     └──────────────────────────┘
   │  │              │
   │  │     ╱  CHARACTER  ╲ ─── S8
   │  │  NO ╱  STRING CANDIDATES ╲
   └──┴────┤   PRESENT ?     ├
            ╲               ╱
                   │ YES
```

```
                      ┌──────────────────────────┐
                      │ DISPLAY CHARACTER STRING │ ─── S9
                      │ CANDIDATES               │
                      └──────────────────────────┘
                                 │
                      ╱  SELECTION    ╲ ─── S10
                     ╱ NUMBER ENTERED ? ╲──── YES ──┐
                      ╲               ╱              │
                             │ NO                    │ ─── S12
                  ─── S11    │               ┌──────────────────┐
           NO ╱           ╲                  │ STORE SELECTED   │
         ┌───┤  NL KEY ON ? ├                │ CHARACTER STRING │
         │    ╲           ╱                  └──────────────────┘
         │          │ YES ◄──────────────────────────┘
         │   ┌──────────────────────────────┐
         │   │ DISPLAY SELECTED CHARACTER STRING│ ─── S13
         │   │ & CLEAR DISPLAY OF CHARACTER STRING│
         │   │ CANDIDATES                      │
         │   └──────────────────────────────┘
         │              │
         │             (1)
```

**FIG.5**

```
                                              70

71┐  ***FAPT START ***
72┐  00010 PART, @PROGRAM

75┐   ┌──────────────────────────┐
      │ 1. TURN                  │
      │ 2. MILL                  │
      │                          │
      │                          │
      └──────────────────────────┘
73┐  00020 MCHN
                74
```

**FIG.6**

```
                                              70

71┐  ***  FAPT  START  ***
72┐  00010 PART, @PROGRAM




73┐  00020 MCHN, MILL
                    74
```

**FIG.7**

```
                                              70

71┐  ***  FAPT  START  ***
72┐  00010 PART, @PROGRAM




73┐  00020 MCHN, MILL
                    74
```

FIG.8

70

71 — *** FAPT START ***

72 — 00010 PART, @PROGRAM

75 —
1. INCR
2. ABS

73 — 00020 MCHN, MILL,

74

FIG.9

70

71 — *** FAPT START ***

72 — 00010 PART, @PROGRAM

73 — 00020 MCHN, MILL, INCR

74

FIG.10

70

71 — *** FAPT START ***

72 — 00010 PART, @PROGRAM
00020 MCHN, MILL, INCR

73 —

74

# INTERNATIONAL SEARCH REPORT

International Application No PCT/JP90/00565

**I. CLASSIFICATION OF SUBJECT MATTER** (if several classification symbols apply, indicate all) [6]

According to International Patent Classification (IPC) or to both National Classification and IPC

Int. Cl$^5$    G05B19/403, 19/405

**II. FIELDS SEARCHED**

Minimum Documentation Searched

| Classification System | Classification Symbols |
|---|---|
| IPC | G05B19/403, 19/405 |

Documentation Searched other than Minimum Documentation
to the Extent that such Documents are Included in the Fields Searched [8]

| | |
|---|---|
| Jitsuyo Shinan Koho | 1971 - 1990 |
| Kokai Jitsuyo Shinan Koho | 1971 - 1990 |

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| Y | JP, A, 62-52608 (Fanuc Ltd.),<br>7 March 1987 (07. 03. 87),<br>Line 13, lower right column, page 3 to<br>line 5, lower left column, page 5<br>(Family: none) | 1 - 4 |
| Y | JP, A, 63-269205 (Fanuc Ltd.),<br>7 November 1988 (07. 11. 88),<br>Line 5, upper right column to line 15,<br>lower left column, page 3<br>(Family: none) | 1 - 4 |
| Y | JP, A, 01-32309 (Fanuc Ltd.),<br>2 February 1989 (02. 02. 89),<br>Line 1, upper left column, page 3 to<br>line 13, upper left column, page 4<br>(Family: none) | 1 - 4 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| June 25, 1990 (25. 06. 90) | July 9, 1990 (09. 07. 90) |

| International Searching Authority | Signature of Authorized Officer |
|---|---|
| Japanese Patent Office | |

Form PCT ISA 210 (second sheet) (January 1985)